# EUROPÄISCHE PATENTSCHRIFT

(11) **EP 2 346 724 B1**
(45) Veröffentlichungstag und Bekanntmachung des Hinweises auf die Patenterteilung: **28.11.2012**
(21) Anmeldenummer: 09783148.1
(22) Anmeldetag: 18.09.2009
(51) Int. Cl.: B60S 1/08, B60S 1/16, B60S 1/24

(54) **GETRIEBE**
TRANSMISSION
BOÎTE DE VITESSES

(30) Priorität: 10.11.2008 DE 102008043608
(43) Veröffentlichungstag der Anmeldung: 27.07.2011
(73) Patentinhaber: Robert Bosch GmbH, 70442 Stuttgart (DE)
(72) Erfinder: REITH, Michael, 77815 Buehl-Vimbuch (DE); ALBRECHT, Gerard, 67690 Hatten (FR)
(86) Internationale Anmeldenummer: PCT/EP2009/062089
(87) Internationale Veröffentlichungsnummer: WO 2010/052059

(56) Entgegenhaltungen:
- EP-A2- 1 736 385
- WO-A1-01/72563
- DE-A1- 3 732 069
- DE-A1-102005 062 778

## Beschreibung

### GETRIEBE

Die Erfindung betrifft ein Getriebe, insbesondere ein Getriebe für einen Scheibenwischerantrieb, sowie einen Scheibenwischerantrieb mit einem Motor und einem Getriebe.

### Stand der Technik

Im Stand der Technik sind zahlreiche Scheibenwischerantriebe mit Getriebe bekannt. Sogenannte Rundläufer-Scheibenwischerantriebe weisen ein Zahnrad auf, das eine kontinuierliche Rotationsbewegung ausführt und über ein Umsetzgetriebe eine Wischerwelle in eine pendelnde Bewegung versetzt. Zur Erkennung einer Parkposition des Zahnrads ist es bekannt, das Zahnrad mit einer elektrisch leitfähigen Kontaktbahn zu versehen. Zwei mit einem Gehäuse des Scheibenwischerantriebs verbundene Kontaktfedern bilden Schleifkontakte mit der leitfähigen Kontaktbahn. In einer festgelegten Parkposition des Zahnrads schließt die Kontaktbahn die beiden Kontaktfedern kurz, was mittels einer mit den Kontaktfedern verbundenen Auswertelektronik erkannt wird.

Die EP 1 736 385 A2 beschreibt einen Antrieb für eine Scheibenwischanlage. Eine drehbar gelagerte Scheibe weist auf einer Flachseite ein Schaltelement in Form eines Schaltnoppens auf, der in einer bestimmten Winkelstellung der Scheibe mit einer elastisch aufgehängten Schalteinrichtung zusammenwirkt, um die Schalteinrichtung zu verschwenken und mechanisch und elektrisch mit einen elektrischen Schaltkontakt zu verbinden. Die bestimmte Winkelstellung entspricht dabei einer Parklage eines Wischerarms der Scheibenwischanlage.

### Offenbarung der Erfindung

Die Aufgabe der Erfindung besteht darin, ein verbessertes Getriebe bereitzustellen. Diese Aufgabe wird durch ein Getriebe gemäß Anspruch 1 gelöst. Es ist weiter Aufgabe der Erfindung, einen verbesserten Scheibenwischerantrieb bereitzustellen.

Diese Aufgabe wird durch einen Scheibenwischerantrieb gemäß Anspruch 7 gelöst. Bevorzugte Weiterbildungen sind in den abhängigen Ansprüchen angegeben.

Ein erfindungsgemäßes Getriebe umfasst einen Getriebedeckel und ein Zahnrad, wobei eine in Richtung des Getriebedeckels weisende Seite des Zahnrads einen exzentrisch angeordneten Lagerbolzen aufweist, und eine in Richtung des Zahnrads weisende Seite des Getriebedeckels eine erste elektrische Kontaktfläche und eine zweite elektrische Kontaktfläche aufweist. Dabei sind die erste und die zweite elektrische Kontaktfläche so angeordnet, dass der Lagerbolzen die erste und die zweite elektrische Kontaktfläche in einer vorgegebenen Stellung des Zahnrads elektrisch kurzschließt. Vorteilhafterweise benötigt dieses Getriebe keine Kontaktbahn und keine Kontaktfedern. Durch die Teilereduzierung ergibt sich eine Kostenersparnis. Die geringere Anzahl benötigter Bauteile reduziert außerdem den Montageaufwand und verkürzt die Toleranzkette, was eine präzisere Erkennung einer Stellung des Zahnrads erlaubt.

Zweckmäßigerweise bilden die erste und die zweite elektrische Kontaktfläche und der Lagerbolzen einen Gleitkontakt.

In einer bevorzugten Ausführungsform schließt eine Stirnseite des Lagerbolzens die erste und die zweite elektrische Kontaktfläche in einer vorgegebenen Stellung des Zahnrads elektrisch kurz.

Zweckmäßigerweise sind die erste und zweite Kontaktfläche mit einer Auswertelektronik verbunden, die dazu ausgebildet ist, einen elektrischen Kurzschluss zwischen der ersten und der zweiten Kontaktfläche zu erkennen.

In einer Ausführungsform des Getriebes schließt der Lagerbolzen die erste und die zweite elektrische Kontaktfläche kurz, wenn sich das Zahnrad in einer Parkstellung befindet.

Bevorzugt ist das Getriebe zum Antrieb eines Scheibenwischers ausgebildet.

Ein erfindungsgemäßer Scheibenwischerantrieb umfasst einen Motor und ein erfindungsgemäßes Getriebe.

### Kurze Beschreibung der Zeichnungen

Figur 1 zeigt eine schematische Darstellung eines Getriebes.
Figur 2 zeigt eine schematische Darstellung eines Umsetzgetriebes.

### Ausführungsformen der Erfindung

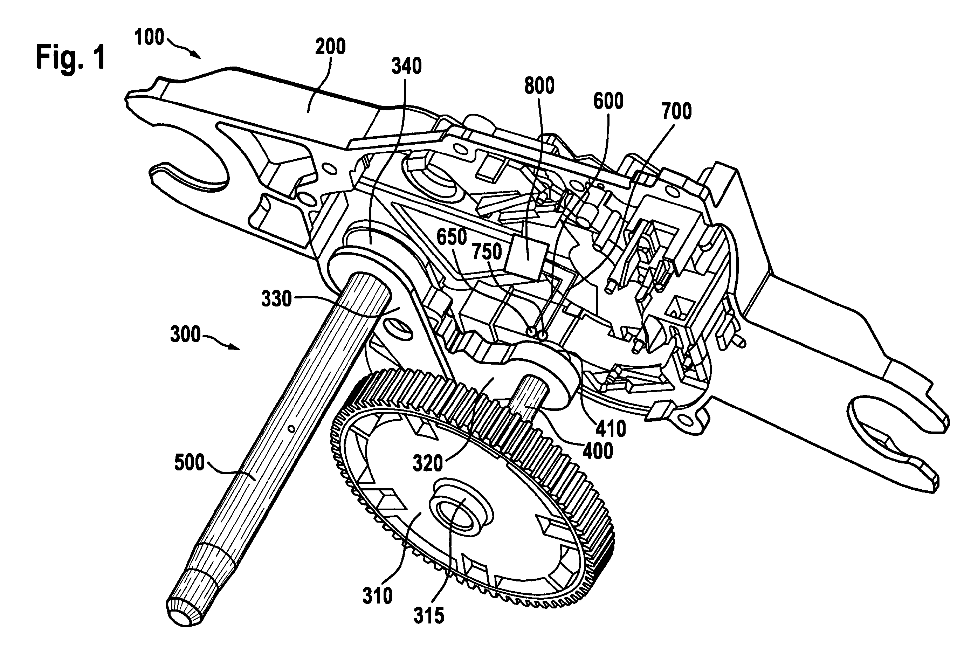

Figur 1 zeigt in einer perspektivischen Darstellung schematisch ein Getriebe 100. Das Getriebe 100 kann beispielsweise als Getriebe in einem Scheibenwischerantrieb, beispielsweise in einem Antrieb eines Heckscheibenwischers dienen.

Das Getriebe 100 weist einen Getriebedeckel 200 auf. Der Getriebedeckel 200 kann aus Metall, Kunststoff oder einem anderen geeigneten Werkstoff gefertigt sein. Das Getriebe 100 umfasst weiter ein Umsetzgetriebe 300. Das Umsetzgetriebe 300 weist ein Zahnrad 310 auf, das von einem nicht dargestellten Motor angetrieben werden kann. Das Zahnrad 310 kann ein Stirnrad, ein Kegelrad, ein Schraubenrad, ein Kronrad, ein Schneckenrad oder ein anderes geeignetes Zahnrad sein. Das Zahnrad 310 kann durch den nicht dargestellten Motor in Rotation um eine Zahnradachse 315 des Zahnrads 310 versetzt werden. Hierfür kann das Zahnrad 310 mit weiteren, nicht dargestellten, Zahnrädern in Verbindung stehen. Das Umsetzgetriebe 300 umfasst außerdem einen Lagerbolzen 400, eine Schubstange 320, einen Führungssteg 330, einen Ritzel 340 und eine Wischerwelle 500. Das Umsetzgetriebe 300 kann außerdem weitere Zahnräder umfassen.

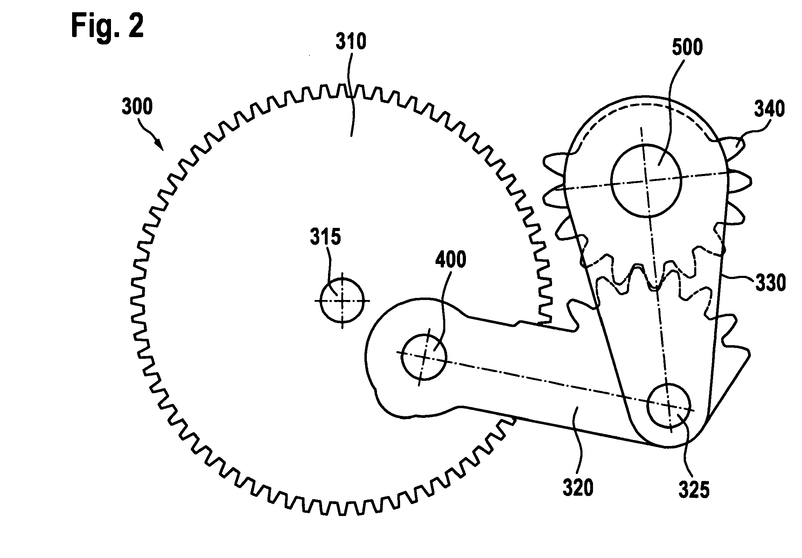

Figur 2 zeigt eine schematische Darstellung des Umsetzgetriebes 300 vom Ort des Getriebedeckels 200 aus betrachtet. Der Lagerbolzen 400 ist senkrecht auf einer dem Getriebedeckel 200 zugewandten Seite des Zahnrads 310 exzentrisch in Bezug auf die Zahnradachse 315 angebracht. Der Lagerbolzen 400 weist also von dem Zahnrad 310 in Richtung des Getriebedeckels 200. Der Lagerbolzen 400 ist gelenkig mit der Schubstange 320 verbunden. Durch eine Drehung des Zahnrads 310 um die Zahnradachse 315 wird die Schubstange 320 über den Lagerbolzen 400 in eine HubPendelbewegung versetzt.

Die Schubstange 320 ist an einem Befestigungspunkt 325 gelenkig mit dem Führungssteg 330 verbunden. Es können auch zwei Führungsstege 330 vorhanden sein, von denen je einer auf jeder Seite der Schubstange 320 angeordnet ist. In der Draufsicht der Figur 2 ist lediglich ein Führungssteg 330 sichtbar.

Die Schubstange 320 umfasst ein Zahnsegment, das mit dem Ritzel 340 im Eingriff steht. Das Ritzel 340 ist verdrehfest mit der Wischerwelle 500 verbunden. Durch die HubPendelbewegung der Schubstange 320 wird das Ritzel 340 in eine Pendeldrehung um die Achse der Wischerwelle 500 versetzt. Durch die verdrehfeste Verbindung zwischen Ritzel 340 und Wischerwelle 500 wird die pendelnde Bewegung des Ritzels 340 auf die Wischerwelle 500 übertragen, so dass diese ebenfalls um die Achse der Wischerwelle 500 pendelt. Durch die Anordnung des Umsetzgetriebes 300 kann eine pendelnde Drehbewegung der Wischerwelle 500 um beispielsweise 180° erreicht werden. Die Wischerwelle 500 ist mit einem in den Figuren 1 und 2 nicht dargestellten Wischarm verbunden, der durch die Pendelbewegung der Wischerwelle 500 angetrieben wird und zum Reinigen einer Scheibe beispielsweise eines Kraftfahrzeugs dient.

Der mit der Wischerwelle 500 verbundene Wischarm kann eine Parkposition aufweisen. Solange der Wischdienst des Wischarms nicht benötigt wird, wird der Wischarm in der Parkposition gehalten. Die Parkposition entspricht einem festgelegten Drehwinkel der Wischerwelle 500, der wiederum mit einer festgelegten Winkelstellung des Zahnrads 310 korrespondiert. Um den Wischerarm in die Parkposition zu bringen, muss der das Zahnrad 310 antreibende Motor also genau dann abgeschaltet werden, wenn sich das Zahnrad 310 in der der Parkposition zugeordneten Winkelstellung befindet.

Hierzu weist der Getriebedeckel 200 eine erste elektrische Kontaktfläche 650 und eine zweite elektrische Kontaktfläche 750 auf. Die erste elektrische Kontaktfläche 650 und die zweite elektrische Kontaktfläche 750 sind, wie in Figur 1 schematisch dargestellt, an einer dem Zahnrad 310 zugewandten Oberfläche des Getriebedeckels 200 angeordnet. Die erste elektrische Kontaktfläche 650 ist mit einer ersten Leiterbahn 600 verbunden. Die zweite elektrische Kontaktfläche 750 ist mit einer zweiten Leiterbahn 700 verbunden. Die erste Leiterbahn 600 und die zweite Leiterbahn 700 können als Leiterbahnen auf einer Leiterplatte ausgeführt sein. Die erste Leiterbahn 600 und die zweite Leiterbahn 700 können aber auch als Kabel oder eine andere Art von Leiterbahnen ausgeführt sein. Die erste Leiterbahn 600 und die zweite Leiterbahn 700 sind mit einer Auswertelektronik 800 verbunden, die beispielsweise ebenfalls am Getriebedeckel 200 angeordnet sein kann. Falls die erste Leiterbahn 600 und die zweite Leiterbahn 700 als Leiterbahnen einer Leiterplatte ausgeführt sind, so kann die Auswertelektronik 800 auf derselben Leiterplatte vorgesehen sein.

Der Lagerbolzen 400 des Umsetzgetriebes 300 weist eine dem Getriebedeckel 200 zugewandte Stirnseite 410 auf. Bei einer Drehung des Zahnrads 310 um die Zahnradachse 315 vollführt der Lagerbolzen 400 eine Kreisbewegung vor der dem Zahnrad 310 zugewandten Seite des Getriebedeckels 200. Der Abstand zwischen der Stirnseite 410 des Lagerbolzens 400 und dem Getriebedeckel 200 ist dabei so gewählt, dass der Lagerbolzen 400 den Getriebedeckel 200 während einer Kreisbewegung lediglich genau am Ort der ersten Kontaktfläche 650 und der zweiten Kontaktfläche 750 berührt. Die Stirnseite 410 des Lagerbolzens 400 besteht aus einem leitfähigen Material. Der Durchmesser des Lagerbolzens 400 und seiner Stirnseite 410 ist so gewählt, dass die Stirnseite 410 des Lagerbolzens 400 die erste Kontaktfläche 650 und die zweite Kontaktfläche 750 gleichzeitig berühren kann. Wenn die Stirnseite 410 des Lagerbolzens 400 die erste Kontaktfläche 650 und die zweite Kontaktfläche 750 gleichzeitig berührt, so werden die erste Kontaktfläche 650 und die zweite Kontaktfläche 750 miteinander kurzgeschlossen, was mittels der Auswertelektronik 800 erkannt werden kann.

Die erste Kontaktfläche 650 und die zweite Kontaktfläche 750 sind derart am Getriebedeckel 200 angeordnet, dass sie genau dann durch die Stirnseite 410 des Lagerbolzens 400 kurzgeschlossen werden, wenn sich das Zahnrad 310 in derjenigen Winkelstellung befindet, in der der mit der Wischerwelle 500 verbundene Wischarm sich in der Parkposition befindet. Soll die Scheibenwischanlage abgeschaltet werden, so sorgt die Auswertelektronik 800 dafür, dass der das Zahnrad 310 antreibende Motor so lange weiterläuft, bis die erste Kontaktfläche 650 und die zweite Kontaktfläche 750 durch die Stirnseite 410 des Lagerbolzens 400 kurzgeschlossen werden. In diesem Moment schaltet die Auswertelektronik 800 den das Zahnrad 310 antreibenden Motor ab. Der mit der Wischerwelle 500 verbundene Wischarm befindet sich dann in der Parkposition.

Im in Figur 1 dargestellten Ausführungsbeispiel sind die erste Kontaktfläche 650, die zweite Kontaktfläche 750 und die Stirnseite 410 des Lagerbolzens 400 als Schleif oder Gleitkontakt ausgebildet. In anderen Ausführungsformen können die erste Kontaktfläche 650 und die zweite Kontakftläche 750 auch als Mikroschalter ausgebildet sein, die durch den Lagerbolzen 400 betätigt werden. Die der Parkposition des mit der Wischerwelle 500 verbundenen Wischarms zugeordnete Winkelstellung des Zahnrads 310 kann über die Lage der ersten Kontaktfläche 650 und der zweiten Kontaktfläche 750 auf dem Getriebedeckel 200 angepasst werden.

## Patentansprüche

1. Getriebe (100)
mit einem Getriebedeckel (200) und einem Zahnrad (310),
wobei eine in Richtung des Getriebedeckels (200) weisende Seite des Zahnrads (310) einen exzentrisch angeordneten Lagerbolzen (400) aufweist,
und eine in Richtung des Zahnrads (310) weisende Seite des Getriebedeckels (200) eine erste elektrische Kontaktfläche (650) und eine zweite elektrische Kontaktfläche (750) aufweist,
**dadurch gekennzeichnet, dass**
die erste und die zweite elektrische Kontaktfläche (650, 750) so angeordnet sind, dass der Lagerbolzen (400) die erste und die zweite elektrische Kontaktfläche (650, 750) in einer vorgegebenen Stellung des Zahnrads (310) berührt und elektrisch kurzschließt.

2. Getriebe (100) nach Anspruch 1,
wobei die erste und die zweite elektrische Kontaktfläche (650, 750) und der Lagerbolzen (400) einen Gleitkontakt bilden.

3. Getriebe (100) nach einem der vorhergehenden Ansprüche,
wobei eine Stirnseite (410) des Lagerbolzens (400) die erste und die zweite elektrische Kontaktfläche (650, 750) in einer vorgegebenen Stellung des Zahnrads (310) elektrisch kurzschließt.

4. Getriebe (100) nach einem der vorhergehenden Ansprüche,
wobei die erste und die zweite Kontaktfläche (650, 750) mit einer Auswertelektronik (800) verbunden sind, die dazu ausgebildet ist, einen elektrischen Kurzschluss zwischen der ersten und der zweiten Kontaktfläche (650, 750) zu erkennen.

5. Getriebe (100) nach einem der vorhergehenden Ansprüche,
wobei der Lagerbolzen die erste und die zweite elektrische Kontaktfläche (650, 750) kurzschließt, wenn sich das Zahnrad (310) in einer Parkstellung befindet.

6. Getriebe (100) nach einem der vorhergehenden Ansprüche,
wobei das Getriebe (100) zum Antrieb eines Scheibenwischers ausgebildet ist.

7. Scheibenwischerantrieb
mit einem Motor
und einem Getriebe (100) nach einem der Ansprüche 1 bis 6.

## Claims

1. Transmission (100) with a transmission cover (200) and a gearwheel (310), wherein a side of the gearwheel (310) facing in the direction of the transmission cover (200) has an eccentrically arranged bearing bolt (400), and a side of the transmission cover (200) facing in the direction of the gearwheel (310) has a first electric contact surface (650) and a second electric contact surface (750), **characterized in that** the first and the second electric contact surfaces (650, 750) are arranged in such a manner that the bearing bolt (400) touches and electrically short-circuits the first and the second electric contact surfaces (650, 750) in a predetermined position of the gearwheel (310).

2. Transmission (100) according to Claim 1, wherein the first and the second electric contact surfaces (650, 750) and the bearing bolt (400) form a sliding contact.

3. Transmission (100) according to one of the preceding claims, wherein an end side (410) of the bearing bolt (400) electrically short-circuits the first and the second electric contact surfaces (650, 750) in a predetermined position of the gearwheel (310).

4. Transmission (100) according to one of the preceding claims, wherein the first and the second contact surfaces (650, 750) are connected to an electronic evaluation unit (800) which is designed to identify an electric short-circuit between the first and the second contact surfaces (650, 750).

5. Transmission (100) according to one of the preceding claims, wherein the bearing bolt short-circuits the first and the second electric contact surfaces (650, 750) when the gearwheel (310) is in a parking position.

6. Transmission (100) according to one of the preceding claims, wherein the transmission (100) is designed for driving a window wiper.

7. Window wiper drive with a motor and a transmission (100) according to one of Claims 1 to 6.

## Revendications

1. Transmission (100),
comprenant un couvercle de transmission (200) et une roue dentée (310),
un côté de la roue dentée (310) orienté en direction du couvercle de transmission (200) comprenant un boulon de palier (400) disposé de manière excentrique,
et un côté du couvercle de transmission (200) orienté en direction de la roue dentée (310) comprenant une première surface de contact électrique (650) et une deuxième surface de contact électrique (750),
**caractérisée en ce que**
la première et la deuxième surface de contact électrique (650, 750) sont disposées de telle sorte que, dans une position prédéfinie de la roue dentée (310), le boulon de palier (400) soit en contact avec la première et la deuxième surface de contact électrique (650, 750) et court-circuite électriquement celles-ci.

2. Transmission (100) selon la revendication 1,
dans laquelle la première et la deuxième surface de contact électrique (650, 750) ainsi que le boulon de palier (400) forment un contact glissant.

3. Transmission (100) selon l'une quelconque des revendications précédentes,
dans laquelle un côté frontal (410) du boulon de palier (400) court-circuite électriquement la première et la deuxième surface de contact électrique (650, 750) dans une position prédéfinie de la roue dentée (310).

4. Transmission (100) selon l'une quelconque des revendications précédentes,
dans laquelle la première et la deuxième surface de contact (650, 750) sont connectées à une unité d'évaluation électronique (800) qui est conçue pour détecter un court-circuit électrique entre la première et la deuxième surface de contact (650, 750).

5. Transmission (100) selon l'une quelconque des revendications précédentes,
dans laquelle le boulon de palier court-circuite la première et la deuxième surface de contact électrique (650, 750) lorsque la roue dentée (310) se trouve dans une position de repos.

6. Transmission (100) selon l'une quelconque des revendications précédentes,
dans laquelle la transmission (100) est conçue pour l'entraînement d'un essuie-glace.

7. Entraînement d'essuie-glace,
comprenant un moteur
et une transmission (100) selon l'une quelconque des revendications 1 à 6.
